# EUROPÄISCHE PATENTSCHRIFT

(11) **EP 1 384 614 B1**
(45) Veröffentlichungstag und Bekanntmachung des Hinweises auf die Patenterteilung: **11.04.2007**
(21) Anmeldenummer: 03016113.7
(22) Anmeldetag: 16.07.2003
(51) Int. Cl.: B60J 7/20, B60J 7/10

(54) **Fahrzeug mit einem zumindest teilweise abnehmbaren Dach**
Automobile with detachable roof
Véhicule avec toit amovible

(30) Priorität: 25.07.2002 DE 10233765
(43) Veröffentlichungstag der Anmeldung: 28.01.2004
(73) Patentinhaber: ADAM OPEL AG, 65423 Rüsselsheim (DE)
(72) Erfinder: Leopold, Frank, 65232 Taunusstein (DE)

(56) Entgegenhaltungen:
- DE-A- 4 437 571
- FR-A- 2 811 266
- US-A- 4 330 150
- US-A- 4 940 283
- US-A- 5 110 178
- PATENT ABSTRACTS OF JAPAN vol. 010, no. 163 (M-487), 11. Juni 1986 (1986-06-11) & JP 61 016127 A (NITSUSAN SHIYATAI KK), 24. Januar 1986 (1986-01-24)

## Beschreibung

Die Erfindung betrifft ein Fahrzeug mit einem zumindest teilweise abnehmbaren Dach gemäß dem Oberbegriff des Anspruchs 1, insbesondere einen Geländewagen, einen Roadster oder ein Cabriolet.

Ein derartiges Fahrzeug ist aus dem Dokument US-A-4990283 bekannt.

Üblicherweise ist bei einem Fahrzeug mit einem zumindest teilweise abnehmbaren Verdeck oder Dach, dieses mit einem sogenannten Faltverdeck, insbesondere Stoffverdeck oder einem versenkbaren festen Dach, zum Beispiel einem Hardtop, versehen. Aus der DE 43 41 343 A1 ist beispielsweise ein Fahrzeug bekannt, welches ein verfahrbares Dachteil oder Schiebedach aufweist. Durch Verschwenken einer Heckklappe des Fahrzeugs zusammen mit dem Dachteil wird dabei der Fahrzeuginnenraum quasi in einen Roadster verwandelt. Aus der DE 197 49 194 A1 ist darüber hinaus ein Fahrzeug bekannt, welches ein auf eine Heckklappe verfahrbares Dachteil aufweist. Zur Erhöhung der Variabilität ist die Heckklappe zusammen mit dem Dachteil um eine im Fahrzeugendbereich liegenden Querachse in den Fahrzeuginnenraum verschwenkbar.

Derartige den Fahrzeuginnenraum nutzende Dachteile haben den Nachteil, dass diese besonders aufwändig sind, da diese möglichst wasser-, staub- und zugdicht im Fahrzeuginnenraum angeordnet sein müssen. Des Weiteren sind zur Ablage der Dachteile aufwändige elektrohydraulische oder elektrische Antriebe erforderlich. Die als Faltverdeck ausgeführten Dachteile haben darüber hinaus den Nachteil, dass sie nur begrenzt gegenüber Regen oder Zugluft abgedichtet werden können. Insbesondere bei höheren Geschwindigkeiten flattert bei geschlossenem Verdeck die Dachbespannung, was zu störenden Geräuschen führen kann. Ferner ist eine derartige Stoffbespannung des Faltverdecks besonders verschleißanfällig, so dass dieses nach relativ kurzer Zeit erneuert werden muss.

Der Erfindung liegt daher die Aufgabe zugrunde, ein Fahrzeug mit einem zumindest teilweise abnehmbaren Dach anzugeben, welches besonders stabil und fest ausgeführt und gleichzeitig einfach handhabbar ist. Darüber hinaus sollte das Dach im aufgeklappten Zustand einen weitgehend großvolumigen Kofferraum ermöglichen.

Diese Aufgabe wird erfindungsgemäß durch den Gegenstand des Anspruchs 1 gelöst.

Die Erfindung geht dabei von der Überlegung aus, dass für eine besonders variable und einfache Gestaltung des offenen Fahrens bei einem Fahrzeug ein zumindest teilweise abnehmbares Dach ohne elektrische oder elektrohydraulische Antriebe verstaubar sein sollte. Darüber hinaus sollten für eine besonders platzsparende Ablage des Daches bereits im Fahrzeug vorhandene Hohlräume zwischen Fahrzeuginnenhaut und Fahrzeugaußenhaut genutzt werden. Hierzu ist das gesamte Fahrzeugdach durch entsprechende Auslegung und Unterteilung in durch das Fahrzeug selbst gebildete Raumbereiche oder Hohlräume verstaubar, so dass der Kofferraum weitgehend unberührt und für die übliche Benutzung erhalten bleibt.

Zweckmäßigerweise ist das jeweilige Dachsegment in seiner Kontur an das Trägerelement angepasst. Hierdurch ist sichergestellt, dass die das äußere Design des Fahrzeugs bestimmende Fahrzeugaußenhaut im wesentlichen in der Kontur unverändert bliebt. Darüber hinaus ist eine hinreichend hohe dynamische und statische Steifigkeit des Fahrzeugs ermöglicht.

Bevorzugt sind die Dachsegmente getrennt voneinander in dem Trägerelement angeordnet. Hierdurch ist ein besonders kleinvolumiges Trägerelement ermöglicht. Das Trägerelement ist bevorzugt durch einen zwischen einer Fahrzeugaußenhaut und -innenhaut gebildeten Hohlraum gebildet. Beispielsweise ist das Trägerelement im Seitenbereich durch die Seitentür gebildet. Insbesondere ist das Trägerelement durch den Hohlraum zwischen der Türau-ßenhaut und der Türstruktur (auch Türgerippe genannt) gebildet.

Alternativ oder zusätzlich ist das Trägerelement im Heckbereich durch die Heckklappe gebildet. Bei einer weiteren alternativen Ausführungsform des Trägerelements ist dieses im Heckbereich durch einen Unterboden gebildet.

Für eine besonders einfache Anordnung ist die Fahrzeugaußenhaut um eine zur Fahrzeuglängsachse horizontal verlaufenden Achse schwenkbar angeordnet. Bei dem als Heckklappe ausgebildeten Trägerelement ist die Fahrzeugaußenhaut zweckmäßigerweise um eine zur Fahrzeuglängsachse quer verlaufenden Achse schwenkbar angeordnet. Die je nach Art des Trägerelements längs bzw. quer verlaufenden Schwenkachsen zum Aufklappen oder Aufschwenken der Fahrzeugaußenhaut ermöglichen, dass der als Stauraum dienende Hohlraum von oben her geöffnet wird. Vorzugsweise ist das jeweilige Dachsegment von oben zwischen der Fahrzeugaußenhaut und der Fahrzeuginnenhaut einführbar.

Zweckmäßigerweise ist am unteren Ende des Trägerelements, z. B. der Seitentür oder der Heckklappe, zwischen der Fahrzeugaußenhaut und der Fahrzeuginnenhaut eine Aufnahmehalterung für das Dachsegment vorgesehen. Dabei ist das jeweilige Dachsegment bevorzugt mit der gekrümmten Kante nach oben im Trägerelement und mit der schmalen Seite nach unten in der Aufnahmehalterung gehalten. Beispielsweise ist die Aufnahmehaltung als eine Spann- oder Klemmnut ausgebildet. Hierdurch ist eine besonders feste und sichere Arretierung der Dachsegmente im betreffenden Trägerelement ermöglicht. Je nach Art und Ausführung der Aufnahmehalterung weist diese zur zusätzlichen Arretierung des Dachsegments im Trägerelement ein Spannelement oder ein Fixierelement auf.

Bevorzugt ist das Dach längsseitig in zwei Dachsegmente geteilt. Dies ermöglicht eine besonders einfache Abnahme des Daches. Bevorzugt sind die Dachsegmente derart ausgebildet, dass sie in Fahrzeuglängsrichtung gesehen jeweils eine zur Seitenwand hin gekrümmte Seitenkante und zueinander ineinander greifende Seitenkanten aufweisen. Durch die im Wesentlichen an der Fahrzeuglängsachse ineinander greifenden Seitenkanten der Dachsegmente sind diese zu deren Arretierung lediglich im Seitenwandbereich mit Spann- oder Befestigungselementen versehen. Durch Öffnen der als sogenannte Schnellverschlüsse ausgebildeten Befestigungselemente ist eine besonders einfache Handhabung des Öffnens des Daches ermöglicht, welches auch auf Kurzstrecken ein Offenfahren des Fahrzeugs sicherstellt. Alternativ zur längsseitigen Unterteilung des Daches kann dieses auch quer geteilt sein. Zur Unterstützung der ineinander greifenden Seitenkanten der Dachsegmente kann ein Längs- oder Quersteg vorgesehen sein, auf welchem die zur Fahrzeugmitte hin endenden Seitenkanten sicher, insbesondere arretierend, angeordnet sind.

Vorzugsweise ist das jeweilige Dachsegment mit der gekrümmten Seitenkante nach oben im Trägerelement angeordnet. Hierdurch ist ein das Fahrzeug charakterisierendes Design durch eine besonders starke Schulter bewirkt. Eine derartige, lediglich das Fahrzeugdesign beeinflussende Anordnung des Dachsegments in bereits existierenden Hohlräumen der Fahrzeugkarosserie ermöglicht die Beibehaltung des gesamten Volumens für den Kofferraum. Bedingt durch verschiedene das Trägerelement bildenden Hohlräume der Fahrzeugkarosserie sind weitgehend geringe Änderungen des Fahrzeugdesigns erforderlich.

Je nach gewünschtem Fahrzeugtyp - Cabriolet oder Targa - ist ein weiteres, aus einem Überrollbügel und eine Heckscheibe gebildetes und in Fahrzeuglängsrichtung gesehen hinteres Dachsegment als Ganzes im Heckbereich einführbar. Somit bleibt auch beim geöffneten Dach ein möglichst weitgehend großer Kofferraum erhalten, der dazu eine Sicht nach hinten gewährleistet. Zweckmäßigerweise ist das hintere Dachsegment um eine zur Fahrzeuglängsrichtung verlaufenden Querachse drehbar angeordnet. Dabei wird das als ein einheitliches, festes und stabiles Modul ausgebildete hintere Dachsegment komplett unter die Fensterbrüstung gedreht. Insbesondere wird das hintere Dachsegment weitgehend hinter und unter die hinteren Sitze gedreht, so dass der Kofferraum für die übliche Benutzung erhalten bleibt.

Alternativ oder zusätzlich ist das hintere Dachsegment verstellbar an einer Führungsschiene angeordnet. Hierdurch ist eine Verlagerung des Drehpunktes der Querachse ermöglicht. Dies wiederum bewirkt, dass eine zum Wegklappen des hinteren Dachsegmentes geeignete Position eingestellt wird. Bevorzugt ist dabei das hintere Dachsegment manuell, elektrisch und/oder elektrohydraulisch in den Heckbereich einführbar. Hierdurch ist eine nahezu verschleißfeste und geräuscharme sowie leicht, einfach und schnell zu bedienende Verklappung des hinteren Dachsegments ermöglicht.

Vorzugsweise umfasst die jeweilige Seitentür eine rahmenlose Seitenscheibe. Eine derartige rahmenlose Tür weist eine gegenüber herkömmlichen Fahrzeug stärker ausgeführte Seiten- oder Türscheibe auf. Dabei werden die auf die Seitenscheibe wirkenden Kräfte insbesondere auf die Türstruktur oder den Türschacht und auf den Fensterheber übertragen. Hierzu ist der Türschacht verstärkt ausgeführt. Darüber hinaus ist bei einem offenen Fahren des Fahrzeugs durch die im Türschacht zwischen der Türaußenhaut und der Türinnenhaut angeordneten Dachsegmente eine zusätzliche Verstärkung oder Aussteifung gegeben.

Zweckmäßigerweise sind die vorderen Dachsegmente, das hintere Dachsegment und die rahmenlose Seitenscheibe in verschiedenen Öffnungslagen positionierbar. Dies ermöglicht eine vielseitige Dachstellung des betreffenden Fahrzeugs. Beispielsweise ist durch das geöffnete Dach und geöffnete Seitenscheiben bei gleichzeitig stehendem hinteren Dachsegment, insbesondere nach vorn geneigtem Überrollbügel, ein sogenannter Targa gebildet. Durch Herunterklappen oder durch Einführung des hinteren Dachsegments mit dem Überrollbügel in den Heckbereich ist ein herkömmliches Cabriolet geschaffen. Somit ist durch die jeweilige Position der verschiedenen Elemente des Daches ein Fahren des Fahrzeugs als Coupe, Roadster, Targa oder Cabriolet ermöglicht.

Die mit der Erfindung erzielten Vorteile bestehen insbesondere darin, dass durch die Auslegung der zwei Dachsegmente des Daches entsprechend den Abmessungen eines zugeordneten Trägerelements verschiedene, ein offenes Fahren des Fahrzeugs sicherstellende Dachstellungen ermöglicht sind. Dabei sind die Dachsegmente derart ausgewählt, dass diese eine möglichst leichte, einfache und schnelle Bedienung des Öffnens des Daches sicherstellen, wobei die Dachsegmente stabil und fest ausgebildet und somit besonders verschleißfest sind.

Ausführungsbeispiele der Erfindung werden anhand einer Zeichnung näher erläutert. Darin zeigen:
- Figur 1: schematisch im Querschnitt ein Fahrzeug mit einem zumindest teilweise abnehmbaren Dach,
- Figur 2: einen Ausschnitt aus der Figur 1 mit einem ein Dachsegment aufnehmenden Trägerelement,
- Figur 3: schematisch ein Fahrzeug in Seitenansicht mit geschlossenem Dach,
- Figur 4: schematisch ein Fahrzeug in Seitenansicht mit geöffnetem Dach, und
- Figur 5: schematisch ein Fahrzeug mit geöffnetem Dach in perspektivischer Darstellung.

Einander entsprechende Teile sind in allen Figuren mit den gleichen Bezugszeichen versehen.

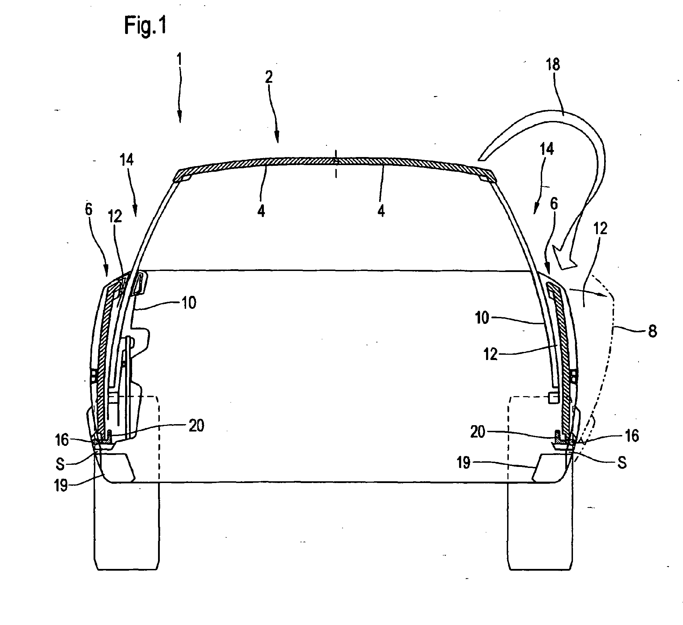

Figur 1 zeigt das Fahrzeug 1 im Querschnitt mit einem zumindest teilweise abnehmbaren Dach 2. Das Dach 2 umfasst dabei wenigsten zwei Dachsegmente 4. Die Dachsegmente 4 sind derart dimensioniert, dass ein zugeordnetes Trägerelement 6 in den Abmessungen unterschritten ist. Das Trägerelement 6 ist bevorzugt durch einen zwischen einer Fahrzeugaußenhaut 8 und einer Fahrzeuginnenhaut 10 gebildeten Hohlraum 12 ausgeführt. Dabei ist das jeweilige Dachsegment 4 in seiner Kontur an das Trägerelement 6 angepasst. Die Dachsegmente 4 sind beispielsweise aus Kunststoff- oder Blechteilen gebildet. Bevorzugt ist das jeweilige Dachsegment 4 aus zwischen Metallschichten eingebundenen Kunststoff gebildet. Hierdurch ist das jeweilige Dachsegment 4 besonders beulfest, stoßfest und extrem dünn ausgeführt.

Bevorzugt ist das Trägerelement 6 im Seitenbereich des Fahrzeugs 1 durch eine Seitentür 14 gebildet. Bedingt durch die in den beiden Seitentüren 14 gebildeten Hohlräume 12 sind die Dachsegmente 4 getrennt voneinander jeweils in einer der beiden Seitentüren 14, den Trägerelementen 6, angeordnet.

Zur Aufnahme der Dachsegmente 4 im Trägerelement 6 ist die Fahrzeugaußenhaut 8 um eine zur Fahrzeuglängsachse horizontal verlaufenden Achse 16, den Drehpunkt, schwenkbar angeordnet. Hierzu ist die Fahrzeugau-ßenhaut 8 auf Höhe des Drehpunktes scharniert. Durch Drehung der Fahrzeugaußenhaut 8 um den Drehpunkt oder die Achse 16 ist das jeweilige Dachsegment 4 von oben, durch den Pfeil 18 angedeutet, zwischen der Fahrzeugaußenhaut 8 und der Fahrzeuginnenhaut 10 einführbar. Zum Wasser- oder Feuchteabfluss des in dem Trägerelement 6 angeordneten und eventuell feuchten Dachsegment 4 ist die Fahrzeugaußenhaut 8 beabstandet zum Schwellenträger 19 angeordnet. Darüber hinaus weist die Fahrzeugaußenhaut 8 an der Unterseite eine nicht näher dargestellte Öffnung auf. Über die Öffnung fließt dann das Wasser durch einen zwischen der Fahrzeugaußenhaut 8 und dem Schwellenträger 19 gebildeten Spalt S nach außen hin ab.

Für eine besonders sichere Arretierung der Segmente 4 in dem Trägerelement 6 ist am unteren Ende zwischen der Fahrzeugaußenhaut 8 und der Fahrzeuginnenhaut 10 eine Aufnahmehalterung 20 vorgesehen.

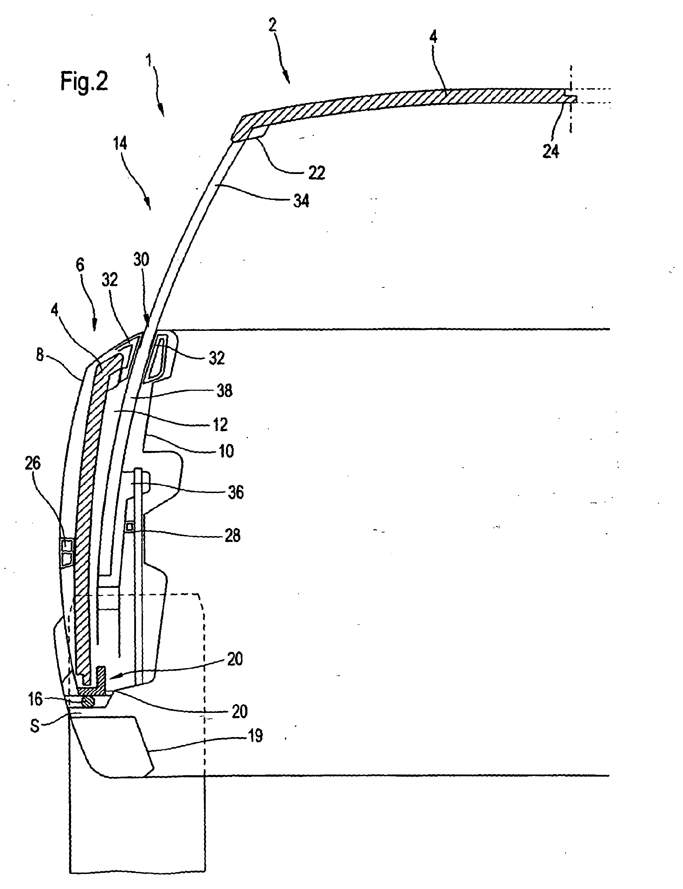

Die Figur 2 zeigt das Trägerelement 6 der Figur 1 im vergrößerten Ausschnitt. Dabei ist die Aufnahmehalterung 20 als ein U-förmiges Profil ausgebildet. Beispielsweise ist die Aufnahmehalterung 20 durch eine U-förmige Nut oder eine U-förmige Dichtung gebildet. Hierdurch ist das in die Seitentür 14 eingeführte Dachsegment 4 im unteren Bereich durch die Aufnahmehalterung 20 arretiert, z. B. eingespannt oder eingeklemmt.

Für eine an das Trägerelement 6 angepasste Kontur des jeweiligen Dachsegments 4 ist dieses in Fahrzeuglängsrichtung gesehen jeweils mit einer zur Seitenwand hin gekrümmten Seitenkante 22 versehen. Für eine an die Abmessungen des Trägerelements 6 angepasste Auslegung der Dachsegmente 4 ist das Dach 2 längsseitig, insbesondere entlang der Fahrzeuglängsachse, geteilt. Das jeweilige Dachsegment 4 weist beispielsweise bei einem zweisitzigen Fahrzeug 1 eine Breite von 600 mm und eine Länge von 700 mm bzw. bei einem viersitzigen Fahrzeug 1 eine Breite von 500 mm und eine Länge von 1200 mm auf. Durch derartige, an das jeweilige Trägerelement 6 angepasste Abmessungen ist das Dachsegment 4 einfach zu handhaben.

Die zur Fahrzeuglängsachse zeigenden Seitenkanten 24 der Dachsegmente 4 sind derart ausgebildet, dass diese ineinander eingreifen. Hierzu sind die Seitenkanten 24 beispielsweise abgestuft ausgeführt. Dabei greifen die Seitenkanten 24 derart ineinander, dass eine Arretierung, z. B. ein Klemmsitz, gegeben ist. Zusätzlich können die Dachsegmente 4 an ihrer gemeinsamen Verbindungsstelle durch einen im Dach 2 angeordneten, nicht näher dargestellten Längs- oder Quersteg gestützt sein.

Für eine ein möglichst ansprechendes Fahrzeugdesign bildende Fahrzeugaußenhaut 8 ist das jeweilige Dachsegment 4 mit der gekrümmten Seitenkante 22 nach oben im Trägerelement 6 angeordnet. Hierdurch ist eine besonders starke Schulter gebildet. Bei einem leicht gewölbten Dachsegment 4 ist dieses zur Unterstützung des breiten Schulterdesigns mit der Wölbung nach außen im Trägerelement 6 angeordnet.

Bei dem durch die Seitentür 14 gebildeten Trägerelement 6 ist das jeweilige Dachsegment 4 derart dimensioniert, dass die Länge der Seitentür 14 sicher unterschritten ist. Das Dachsegment 4 ist insbesondere zwischen Seitenaufprallschutz 26 und Türstruktur 28 angeordnet. Durch eine derartige Anordnung des Dachsegments ist eine zusätzliche Aussteifung und somit eine zusätzliche Verstärkung der Fahrzeugaußenhaut 8 gegenüber auf diese einwirkende Kräfte gegeben. Zusätzlich ist bei dem Fahrzeug 2 eine Verstärkung des Fensterschachtes 30 durch Aussteifungselemente 32 gebildet. Das in der Fahrzeugau-ßenhaut 8 integrierte Verstärkungs- oder Aussteifungselement 32 ist derart ausgeführt, dass das im Trägerelement 6 angeordnete Dachsegment 4 durch das Aussteifungselement 32 zusätzlich arretiert angeordnet ist. Hierdurch ist eine besonders feste und beim Fahren geräuscharme Arretierung des Dachsegments 4 ermöglicht. Beispielsweise ist das Aussteifungselement 32 als Spannprofil oder elastomere Dichtung ausgeführt.

Die Fahrzeugtür 14 umfasst bevorzugt eine rahmenlose Seitenscheibe 34. Die rahmenlose Seitenscheibe 34 ist durch einen Fensterheber 36 in einen Freiraum 38 zwischen der Fahrzeuginnenhaut 10 und dem Hohlraum 12, insbesondere zwischen den als Führungselemente dienenden Aussteifungselemente 32, einführbar.

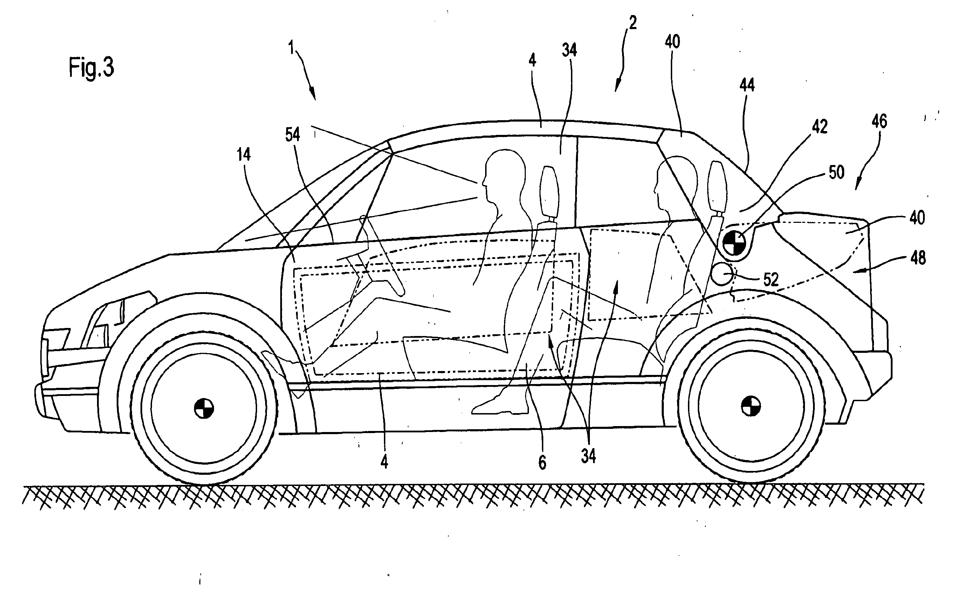

Die Figur 3 zeigt das Fahrzeug 1 in Seitenansicht. Dabei umfasst das Dach 2 zusätzlich zu den Dachsegmenten 4 ein weiteres in Fahrzeuglängsrichtung gesehen hinteres Dachsegment 40. Das hintere Dachsegment 40 ist als ein separates Modul gebildet, welches einen Überrollbügel 42 und eine Heckscheibe 44 umfasst. Im Heckbereich 46 des Fahrzeugs 1 ist ein Stauraum 48, welcher als Kofferraum genutzt wird, angeordnet. Das hintere Dachsegment 40 ist um eine zur Fahrzeugslängsrichtung verlaufenden Querachse 50 drehbar angeordnet. Das hintere Dachsegment 40 ist mittels des Überollbügels 42 über Lager 52 in nicht näher dargestellter Art und Weise mit der Karosserie verbunden. Die Lager 52 sind auf Höhe der Querachse 50 an beiden Seitenwänden der Karosserie gegenüber liegend angeordnet. Dabei sind die Querachse 50 und somit die Lager 52 in etwa in Höhe oder unterhalb der Höhe einer Fensterbrüstung 54 und hinter der Seitentür 14 angeordnet.

Das hintere Dachsegment 40 ist mittels der Querachse 50 in den Stauraum 48 einschwenkbar. Für eine besonders platzsparende Anordnung des hinteren Dachsegments 4 im Stauraum 48 ist das hintere Dachsegment 40 verstellbar an eine nicht näher dargestellte Führungsschiene angeordnet. Mittels der Führungsschiene ist der Drehpunkt der Querachse 50 verstellbar.

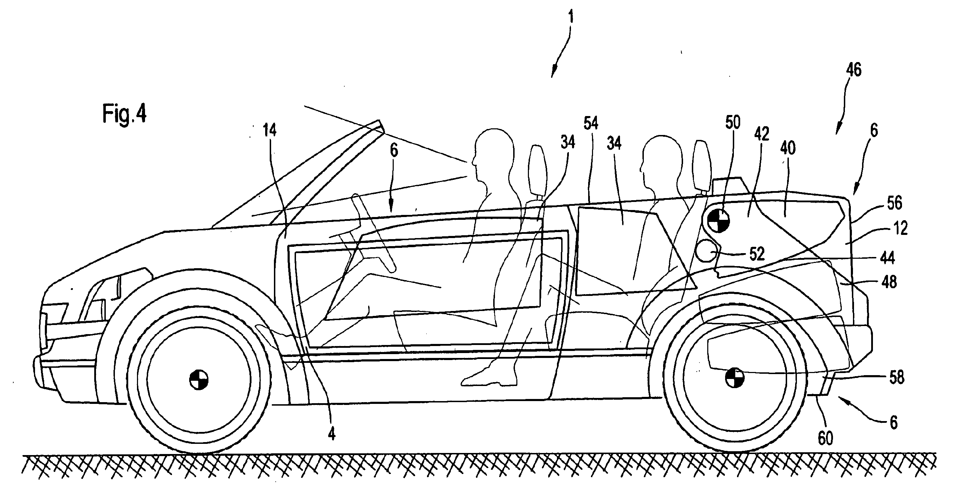

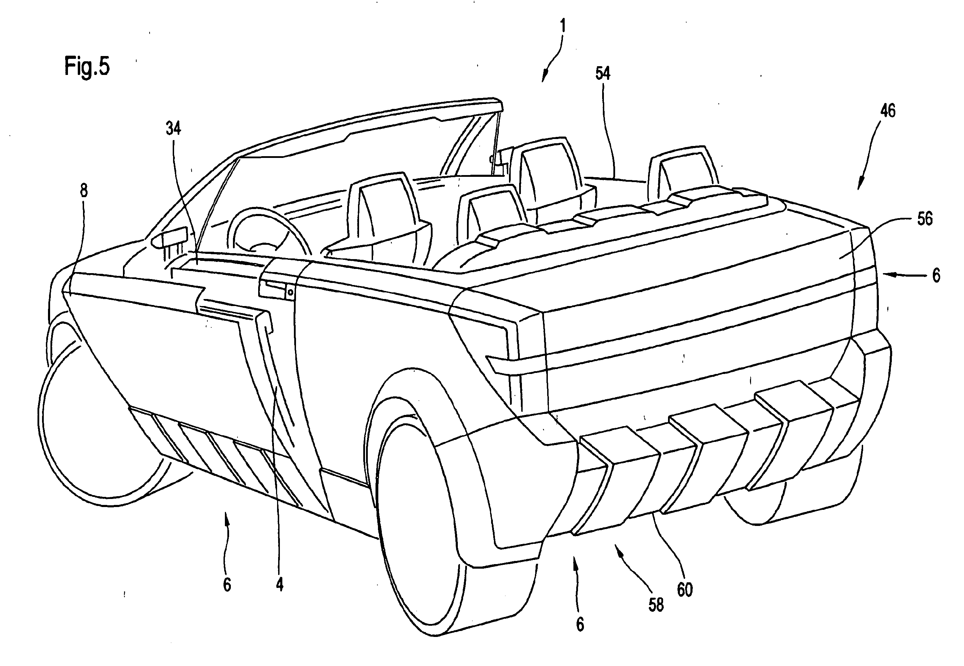

Figuren 4 und 5 zeigen das Fahrzeug 1 mit einem offenen Dach 2 in Seitenansicht bzw. in Perspektive. Zum Öffnen des Daches 2 werden die Dachsegmente 4 über nicht näher dargestellte Arretierungen, z. B. Schnappverschlüsse, manuell geöffnet. Anschließend werden die Dachsegmente 4 in einem der Trägerelemente 6 angeordnet. Beispielhaft ist das Dachsegment 4 im Seitenbereich des Fahrzeugs 1 in die Seitentür 14 einführbar. Zusätzlich oder alternativ ist das Dachsegment 4 im Heckbereich in einer Heckklappe 56 einführbar. Eine weitere Möglichkeit der Aufnahme des Dachsegmentes 4 bietet ein Hohlraum 58 im Unterboden 60 des Fahrzeugs 1. Die Ablage des Dachsegmentes 4 hängt dabei im wesentlichen von der Ausführungsform des Fahrzeugs 1 ab. Beispielsweise ist bei einem zweisitzigen Fahrzeug 1, welches besonders lange Fahrzeugtüren oder Seitentüren 14 aufweist, ein besonders großer, insbesondere langer Hohlraum 12 gebildet. Hierdurch sind bei einem zweisitzigen Fahrzeug 1 die Dachsegmente 4 bei einem offenen Fahren insbesondere in den Seitentüren 14 angeordnet. Demgegenüber kann bei einem viersitzigen Fahrzeug 1 das Dach in Dachsegmente 4 derart unterteilt werden, dass diese in der Seitentür 14, in den Hohlraum 58 des Unterbodens 60 und/oder in den Hohlraum 12 der Heckklappe 56 angeordnet sind.

Je nach Wunsch des Fahrers des Fahrzeugs 1 kann dieses als Cabriolet, Targa oder Roadster gefahren werden. Beispielhaft ist in den Figuren 4 und 5 ein Cabriolet dargestellt. Dabei ist neben der Anordnung der vorderen Dachsegmente 4 in den Trägerelementen 6 das hintere Dachsegment 40 in den Stauraum 48 im Heckbereich 46 eingeführt. Zusätzlich können die rahmenlosen Seitenscheiben 34 in die jeweiligen Seitentür 14 eingeführt werden. Somit sind verschiedene Öffnungslagen des Dachs 2 ermöglicht, wobei die vorderen Dachsegmente 4, das hintere Dachsegment 40 und die rahmenlosen Seitenscheiben 34 in verschiedenen Öffnungslagen positionierbar sind. Die oben beschriebene, besonders variable Gestaltung des Fahrzeugs 1 ermöglicht ein manuelles Öffnen des Dachs 2. Hierdurch sind die Kosten im Vergleich zu einem konventionellen Coupes oder Roadster besonders gering gehalten.

### Bezugszeichenliste

- 1: Fahrzeug
- 2: Dach
- 4: Dachsegemente
- 6: Trägerelement
- 8: Fahrzeugaußenhaut
- 10: Fahrzeuginnenhaut
- 12: Hohlraum
- 14: Seitentür
- 16: Achse
- 18: Pfeil
- 20: Aufnahmehalterung
- 22, 24: Seitenkanten
- 26: Seitenaufprallschutz
- 28: Türstruktur
- 30: Fensterschacht
- 32: Aussteifungslemente
- 34: rahmenlose Seitenscheibe
- 36: Fensterheber
- 38: Freiraum
- 40: hinteres Dachsegment
- 42: Überrollbügel
- 44: Heckscheibe
- 46: Heckbereich
- 48: Stauraum
- 50: Querachse
- 52: Lager
- 54: Fensterbrüstung
- 56: Heckklappe
- 58: Hohlraum
- 60: Unterboden

## Patentansprüche

1. Fahrzeug (1) mit einem zumindest teilweise abnehmbaren Dach (2) mit wenigstens zwei Dachsegmenten (4), die derart dimensioniert sind, dass ein zugeordnetes Trägerelement (6) in den Abmessungen unterschritten ist, wobei das Trägerelement (6) durch einen zwischen einer Fahrzeugaußenhaut (8) und einer Fahrzeuginnenhaut (10) gebildeten Hohlraum (12) gebildet ist, **dadurch gekennzeichnet, dass** das Trägerelement (6) im Seitenbereich des Fahrzeugs durch eine Seitentür (14) gebildet ist.

2. Fahrzeug nach Anspruch 1, **dadurch gekennzeichnet, dass** das jeweilige Dachsegment (4) in seiner Kontur an das Trägerelement (6) angepasst ist.

3. Fahrzeug nach Anspruch 1 oder 2, **dadurch gekennzeichnet, dass** die Dachsegmente (4) getrennt voneinander in dem Trägerelement (6) angeordnet sind.

4. Fahrzeug nach einem der Ansprüche 1 bis 3, **dadurch gekennzeichnet, dass** die Fahrzeugaußenhaut (8), insbesondere um eine zur Fahrzeuglängsachse horizontal verlaufenden Achse (16) schwenkbar angeordnet ist.

5. Fahrzeug nach einem der Ansprüche 1 bis 4, **dadurch gekennzeichnet, dass** das jeweilige Dachsegment (4) von oben zwischen Fahrzeugaußenhaut (8) und Fahrzeuginnenhaut (10) einführbar ist.

6. Fahrzeug nach einem der Ansprüche 1 bis 5, **dadurch gekennzeichnet, dass** am unteren Ende des Trägerelements (6), insbesondere zwischen der Fahrzeugaußenhaut (8) und der Fahrzeuginnenhaut (10), eine Aufnahmehalterung (20) für das Dachsegment (4) vorgesehen ist.

7. Fahrzeug nach einem der Ansprüche 1 bis 6, **dadurch gekennzeichnet, dass** das Dach (1) längsseitig in zwei Dachsegmente (4) geteilt ist.

8. Fahrzeug nach einem der Ansprüche 1 bis 7, **dadurch gekennzeichnet, dass** die Dachsegmente (4) in Fahrzeuglängsrichtung gesehen jeweils eine zur Seitenwand hin gekrümmte Seitenkante (22) und zueinander ineinander greifende Seitenkanten (24) aufweisen.

9. Fahrzeug nach Anspruch 8, **dadurch gekennzeichnet, dass** das jeweilige Dachsegment (4) mit der gekrümmten Seitenkante (22) nach oben im Trägerelement (6) angeordnet ist.

10. Fahrzeug nach einem der Ansprüche 1 bis 9, **dadurch gekennzeichnet, dass** ein weiteres, aus einem Überrollbügel und einer Heckscheibe gebildetes und in Fahrzeuglängsrichtung gesehen hinteres Dachsegment (40) als ganzes im Heckbereich (46) einführbar ist.

11. Fahrzeug nach Anspruch 10, **dadurch gekennzeichnet, dass** das hintere Dachsegment (40) um eine zur Fahrzeuglängsrichtung verlaufenden Querachse (50) drehbar angeordnet ist.

12. Fahrzeug nach Anspruch 10, **dadurch gekennzeichnet, dass** das hintere Dachsegment (40) verstellbar an einer Führungsschiene angeordnet ist.

13. Fahrzeug nach einem der Ansprüche 10 bis 12, **dadurch gekennzeichnet, dass** das hintere Dachsegment (40) manuell, elektrisch und/oder elektrohydraulisch in den Heckbereich (46) einführbar ist.

14. Fahrzeug nach einem der Ansprüche 1 bis 13, **dadurch gekennzeichnet, dass** die jeweilige Seitentür (14) eine rahmenlose Seitenscheibe (34) umfasst.

15. Fahrzeug (1) nach einem der Ansprüche 1 bis 14, **dadurch gekennzeichnet, dass** die vorderen Dachsegmente (4), das hintere Dachsegment (40) und die rahmenlosen Seitenscheiben (34) in verschiedenen Öffnungslagen positionierbar sind.

## Claims

1. Vehicle (1) with an at least partially removable roof (2) with at least two roof segments (4), the dimensions of which are such that they are less than those of an associated support element (6), wherein the support element (6) is formed by a hollow space (12) formed between a vehicle outer shell (8) and a vehicle inner shell (10), **characterised in that** the support element (6) in the side region of the vehicle is formed by a side door (14).

2. Vehicle according to Claim 1, **characterised in that** the respective roof segment (4) is adapted in contour to the support element (6).

3. Vehicle according to Claim 1 or 2, **characterised in that** the roof segments (4) are arranged to be separate from one another in the support element (6).

4. Vehicle according to one of Claims 1 to 3, **characterised in that** the vehicle outer shell (8) is arranged to pivot in particular around a shaft (16) running horizontally to the longitudinal axis of the vehicle.

5. Vehicle according to one of Claims 1 to 4, **characterised in that** the respective roof segment (4) can be inserted between the vehicle outer shell (8) and the vehicle inner shell (10) from above.

6. Vehicle according to one of Claims 1 to 5, **characterised in that** a seating (20) for the roof segment (4) is provided at the lower end of the support element (6), in particular between the vehicle outer shell (8) and the vehicle inner shell (10).

7. Vehicle according to one of Claims 1 to 6, **characterised in that** the roof (1) is divided lengthwise into two roof segments (4).

8. Vehicle according to one of Claims 1 to 7, **characterised in that** viewed in the longitudinal direction of the vehicle, the roof segments (4) respectively have a side edge (22) curved towards the side wall and facing intermeshing side edges (24).

9. Vehicle according to Claim 8, **characterised in that** the respective roof segment (4) is arranged in the support element (6) with the curved side edge (22) upwards.

10. Vehicle according to one of Claims 1 to 9, **characterised in that** a further rear roof segment (40), as viewed in the longitudinal direction of the vehicle, formed from a roll bar and a rear window can be inserted as a complete unit in the rear area (46).

11. Vehicle according to Claim 10, **characterised in that** the rear roof segment (40) is arranged to be rotatable around a transverse shaft (50) running towards the longitudinal direction of the vehicle.

12. Vehicle according to Claim 10, **characterised in that** the rear roof segment (40) is arranged to be movable on a guide rail.

13. Vehicle according to one of Claims 10 to 12, **characterised in that** the rear roof segment (40) can be inserted manually, electrically and/or electro-hydraulically into the rear area (46).

14. Vehicle according to one of Claims 1 to 13, **characterised in that** the respective side door (14) includes a frameless side window (34).

15. Vehicle (1) according to one of Claims 1 to 14, **characterised in that** the front roof segments (4), the rear roof segment (40) and the frameless side windows (34) can be positioned in various opening positions.

## Revendications

1. Véhicule (1) comprenant un toit au moins partiellement amovible (2) avec au moins deux parties de toit (4), dimensionnées de manière à être inférieures chacune à un élément support (6) associé, ledit élément support (6) étant réalisé par un compartiment creux (12) formé entre une tôle extérieure (8) et une tôle intérieure (10) du véhicule, **caractérisé en ce que** l'élément support (6) est formé par une porte latérale (14) dans la partie latérale du véhicule.

2. Véhicule selon la revendication 1, **caractérisé en ce que** chaque partie de toit (4) présente un contour ajusté à l'élément support (6).

3. Véhicule selon la revendication 1 ou la revendication 2, **caractérisé en ce que** les parties de toit (4) sont reçues séparément l'une de l'autre dans l'élément support (6).

4. Véhicule selon l'une des revendications 1 à 3, **caractérisé en ce que** la tôle extérieure (8) du véhicule est pivotante, notamment autour d'un axe (16) parallèle à l'axe longitudinal du véhicule.

5. Véhicule selon l'une des revendications 1 à 4, **caractérisé en ce que** chaque partie de toit (4) est insérable par le haut entre la tôle extérieure (8) et la tôle intérieure (10) du véhicule.

6. Véhicule selon l'une des revendications 1 à 5, **caractérisé en ce qu'**un support de réception (20) pour la partie de toit (4) est prévu à l'extrémité inférieure de l'élément support (6), en particulier entre la tôle extérieure (8) et la tôle intérieure (10) du véhicule.

7. Véhicule selon l'une des revendications 1 à 6, **caractérisé en ce que** le toit (1) est longitudinalement divisé en deux parties de toit (4).

8. Véhicule selon l'une des revendications 1 à 7, **caractérisé en ce que** les parties de toit (4) comprennent un bord latéral (22) recourbé vers la paroi latérale, relativement au sens longitudinal du véhicule, et un bord latéral (24) s'engageant dans un bord latéral correspondant.

9. Véhicule selon la revendication 8, **caractérisé en ce que** chaque partie de toit (4) est reçue avec son bord latéral recourbé (22) vers le haut dans l'élément support (6).

10. Véhicule selon l'une des revendications 1 à 9, **caractérisé en ce qu'**une autre partie de toit (40), formée d'un arceau de sécurité et d'une lunette arrière et disposée à l'arrière relativement au sens longitudinal du véhicule, est insérable d'un seul tenant dans la partie arrière (46) du véhicule.

11. Véhicule selon la revendication 10, **caractérisé en ce que** la partie arrière du toit (40) est rotative autour d'un axe transversal (50) à l'axe longitudinal du véhicule.

12. Véhicule selon la revendication 10, **caractérisé en ce que** la partie arrière du toit (40) est déplaçable sur un rail de guidage.

13. Véhicule selon l'une des revendications 10 à 12, **caractérisé en ce que** la partie arrière du toit (40) est insérable par commande manuelle, électrique et/ou électro-hydraulique dans la partie arrière (46) du véhicule.

14. Véhicule selon l'une des revendications 1 à 13, **caractérisé en ce que** chaque porte latérale (14) comprend une vitre latérale (34) sans cadre.

15. Véhicule selon l'une des revendications 1 à 14, **caractérisé en ce que** les parties avant du toit (4), la partie arrière du toit (40) et les vitres latérales (34) sans cadre sont manoeuvrables dans différentes positions d'ouverture.
